# FASCICULE DE BREVET EUROPEEN

(11) **EP 3 684 741 B1**
(45) Date de publication et mention de la délivrance du brevet: **26.08.2026**
(21) Numéro de dépôt: 18782123.6
(22) Date de dépôt: 18.09.2018
(51) Int. Cl.: C04B 35/622, C04B 35/64, C04B 35/10, C04B 35/117, C04B 35/486, C04B 35/80, C04B 35/83, C04B 35/626, C04B 35/14, C04B 35/16, C04B 35/185, C04B 35/447, C04B 35/565, C04B 35/58, B28B 1/24, B28B 23/00

(54) **PROCEDE D'INJECTION D'UNE SUSPENSION CHARGEE DANS UNE TEXTURE FIBREUSE ET PROCEDE DE FABRICATION D'UNE PIECE EN MATERIAU COMPOSITE**
VERFAHREN ZUM INJIZIEREN EINER BELADENEN SUSPENSION IN EINE FASERIGE TEXTUR UND VERFAHREN ZUR HERSTELLUNG EINES TEILS AUS VERBUNDMATERIAL
METHOD FOR INJECTING A LOADED SUSPENSION INTO A FIBROUS TEXTURE AND METHOD FOR PRODUCING A PART FROM COMPOSITE MATERIAL

(30) Priorité: 19.09.2017 FR 1758658
(43) Date de publication de la demande: 29.07.2020
(73) Titulaire: Safran Ceramics, 33185 Le Haillan (FR)
(72) Inventeur: DISS, Pascal, 77550 Moissy-Cramayel (FR); LAVASSERIE, Eric, 77550 Moissy-Cramayel (FR)
(74) Mandataire: Cabinet Beau de Loménie
(86) Numéro de dépôt international: PCT/FR2018/052283
(87) Numéro de publication internationale: WO 2019/058050

(56) Documents cités:
- EP-A1- 0 521 747
- EP-A1- 2 833 450
- EP-A2- 2 942 111
- WO-A1-2016/193569
- DE-A1- 102007 037 680
- FR-A1- 3 030 502
- FR-A1- 3 041 890

## Description

### Arrière-plan de l'invention

La présente invention concerne un procédé d'injection d'une suspension chargée dans une texture fibreuse en vue de la fabrication de pièces en matériau composite par voir liquide.

Dans le domaine de l'élaboration de matériaux composites par voie liquide, de nombreuses variantes de procédés ont été développées avec l'objectif commun de remplir la totalité du volume disponible dans une préforme fibreuse par une suspension suffisamment chargée pour obtenir une porosité finale la plus faible possible.

Parmi les solutions voie liquide, l'une d'entre elles consiste à utiliser des couches fibreuses pré-imprégnées d'une suspension chargée et à les draper sur un outillage de mise en forme. Cependant, cette technique n'est pas compatible avec des textures présentant un tissage tridimensionnel (3D) ou multicouche (2.5D). Ces textures sont en effet difficiles à imprégner par un moyen classique, en raison de l'effet « filtre » de la texture qui empêche la pénétration homogène de la suspension chargée dans toute l'épaisseur de la texture. Ce type de procédé d'élaboration ne permet de réaliser que des pièces en matériau composite ayant une faible épaisseur et un renfort fibreux bidimensionnel (2D). Les caractéristiques mécaniques de ces types de matériau composite restent limitées dans certaines directions. En particulier, ces matériaux ont une faible tenue au délaminage et ne résistent pas bien aux efforts de cisaillement.

Il existe également des procédés de type injection, infusion ou sédimentation, basés sur l'introduction d'une suspension chargée diluée (possédant une viscosité adaptée à une pénétration homogène dans la texture), et filtrée in situ, de manière à la concentrer pour obtenir au stade final le niveau de porosité désiré. Un tel procédé est notamment décrit dans le document WO 2016/102839.

Toutefois, dans le cas d'une texture tissés 3D ou 2.5D, l'imprégnation de la texture fibreuse est longue et délicate en raison de la forme complexe et de la forte épaisseur de la texture. Ainsi, la phase d'injection ou de remplissage de la texture fibreuse avec la suspension chargée n'est pas maîtrisée, ce qui entraîne la présence de porosités dans la pièce finale. Ces procédés nécessitent, par conséquent, la réalisation d'importants travaux de développement, basés sur :
- la mise au point d'une suspension adaptée,
- la modélisation des écoulements au sein de la préforme,
- la mise au point d'un outillage spécifique à une géométrie donnée (avec notamment l'emplacement des points d'injection et de filtration) et des paramètres procédé associés (pression, température, durée, débit,...).

Ces contraintes de mise en œuvre impactent significativement les coûts de développement et de mise en œuvre. En outre, il est difficile de concevoir un outillage d'injection qui s'adapte à différentes géométries des pièces à fabriquer.

EP2833450A1 décrit un procédé d'ajout d'une dispersion de résine phénolique et de poudre de carbone par goutte à goutte sur une feuille de fibres courtes de carbone en utilisant des aiguilles de goutte à goutte.

### Objet et résumé de l'invention

La présente invention a pour but de remédier aux inconvénients précités et de proposer une solution qui permet de mieux maîtriser la phase d'injection ou de remplissage d'une texture fibreuse 3D ou 2.5D par une suspension chargée afin d'obtenir un matériau ou une pièce avec un taux de macroporosités très faible tout en étant apte à s'adapter facilement aux différentes géométries de pièces envisagées.

A cet effet, l'invention propose un procédé d'injection d'une suspension chargée dans une texture fibreuse présentant un tissage tridimensionnel ou multicouche selon la revendication 1.

En utilisant une ou plusieurs aiguilles, il est possible d'injecter la suspension chargée directement à cœur de la texture fibreuse. La durée d'injection et le contrôle de celle-ci dans des textures 3D ou 2.5D sont significativement améliorés en comparaison des procédés voie liquide classiques puisqu'il suffit de traverser localement l'épaisseur de la texture et de déplacer la ou les aiguilles dans cette dernière.

En outre, avec le procédé de l'invention, il y a très peu de perte de charge (et d'effet « filtre » de la texture) puisque la suspension chargée est injectée localement au niveau de chaque aiguille et en quantité limitée. Il est ainsi possible d'injecter une suspension fortement chargée en particules et de supprimer, par conséquent, l'étape de drainage de la phase liquide généralement nécessaire avec les procédés antérieurs dans lesquels la phase liquide doit être majoritaire pour permettre sa pénétration dans toute la texture depuis une de ces faces.

Le procédé de l'invention présente également une grande adaptabilité aux variations de géométries car il est possible d'ajuster la position et la profondeur de pénétration de chaque aiguille dans la texture fibreuse, et cela quelle que soit sa géométrie.

Selon une caractéristique particulière du procédé d'injection de l'invention, chaque aiguille creuse présente de préférence un diamètre externe compris entre 0,4 mm et 0,8 mm, ce qui permet de pénétrer dans la texture fibreuse sans perturber son architecture, en particulier son tissage, tout en étant compatible avec les dimensions des charges solides présentes dans la suspension à injecter.

Selon une autre caractéristique particulière du procédé d'injection de l'invention, la ou les aiguilles creuses présentent de préférence une extrémité biseautée afin de faciliter encore leur pénétration dans la texture fibreuse et en particulier dans les torons, c'est-à-dire dans les espaces intra-fils.

Selon une autre caractéristique particulière du procédé d'injection de l'invention, la ou les aiguilles sont déplacées séquentiellement entre une première face et une deuxième face opposée de la texture fibreuse, la ou les aiguilles étant stoppées à des positions intermédiaires entre ces deux faces, une dose déterminée de suspension chargée étant injectée dans la texture à chaque position intermédiaire. On assure ainsi un remplissage homogène de la texture fibreuse en contrôlant localement la position d'injection de la suspension chargée dans la texture et la quantité de celle-ci délivrée.

Selon encore une autre caractéristique particulière du procédé d'injection de l'invention, la ou les aiguilles sont déplacées en continu entre une première face et une deuxième face opposée de la texture fibreuse, la suspension chargée étant injectée en continu suivant un débit déterminé dans la texture fibreuse. On assure ainsi un remplissage progressif et homogène de la texture fibreuse.

La texture fibreuse peut être compactée avant ou après l'injection de la suspension chargée afin d'atteindre un taux de fibres visé. Dans le premier cas, durant l'injection de la suspension chargée, la texture fibreuse est placée dans un outillage de compactage comprenant au moins sur une face un ou plusieurs orifices de passage pour la ou les aiguilles.

L'invention a également pour objet un procédé de fabrication d'une pièce en matériau composite comprenant :
- formation d'une texture fibreuse par tissage tridimensionnel ou multicouche entre une pluralité de fils,
- injection d'une suspension chargée dans la texture fibreuse selon l'invention, la suspension chargée comprenant au moins un précurseur liquide ou solide d'une matrice,
- compactage de la texture fibreuse injectée,
- transformation dudit au moins un précurseur en matrice.

Selon une caractéristique particulière du procédé de fabrication de l'invention, les fils de la texture fibreuse sont formés de fibres céramiques réfractaires, la suspension chargée contenant des particules céramiques réfractaires en tant que précurseur solide d'une matrice céramique, le procédé comprenant le traitement thermique des particules céramiques réfractaires présentes dans la texture fibreuse afin de former une matrice céramique réfractaire dans ladite texture.

Les fils de la texture fibreuse peuvent être notamment, mais pas exclusivement, formés de fibres constituées d'un ou plusieurs des matériaux suivants : l'alumine, la mullite, la silice, un aluminosilicate, un borosilicate, du carbure de silicium et du carbone.

Les particules céramiques réfractaires peuvent être notamment, mais pas exclusivement en un matériau choisi parmi : l'alumine, la mullite, la silice, un aluminosilicate, un aluminophosphate, la zircone, un carbure, un borure et un nitrure.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique en coupe d'un outillage d'injection conformément à un mode de réalisation de l'invention,
- les figures 2 à 5 montrent l'injection progressive d'une suspension chargée dans une texture fibreuse avec l'outillage d'injection de la figure 1 conformément à un mode de réalisation de l'invention,
- la figure 6 est une vue schématique en coupe montrant une injection de suspension chargée dans une texture fibreuse maintenue dans un outillage de compactage conformément à un autre mode de réalisation.

### Description détaillée de modes de réalisation

Le procédé d'injection de l'invention s'applique à l'injection d'une suspension chargée dans des textures fibreuses obtenues par tissage tridimensionnels (3D) ou multicouches (2.5D), à savoir des textures présentant une géométrie complexe dans laquelle il est difficile d'introduire et de répartir de manière homogène des particules solides en suspension avec les procédés de l'art antérieur tels que par exemple le moulage par injection dits « RTM » ou l'aspiration de poudre submicronique dits « APS », en raison de l'effet « filtre » de la texture, qui empêche la pénétration homogène de la suspension chargée dans toute l'épaisseur de la texture.

La texture fibreuse est réalisée de façon connue par tissage au moyen d'un métier à tisser de type jacquard sur lequel on a disposé un faisceau de fils de chaîne ou torons en une pluralité de couches, les fils de chaîne étant liés par des fils de trame ou inversement. Comme indiqué ci-avant la texture fibreuse est réalisée tissages tridimensionnels (3D) ou multicouches (2.5D).

Par « tissage tridimensionnel » ou « tissage 3D » ou encore « tissage multicouche » ou « tissage 2.5D », on entend ici un mode de tissage par lequel certains au moins des fils de trame lient des fils de chaîne sur plusieurs couches de fils de chaîne ou inversement suivant un tissage correspondant à une armure de tissage qui peut être notamment choisie parmi une des armures suivantes : interlock, multi-toile, multi-satin et multi-sergé.

Par « armure ou tissu interlock », on entend ici une armure de tissage 3D dont chaque couche de fils de chaîne lie plusieurs couches de fils de trame avec tous les fils de la même colonne de chaîne ayant le même mouvement dans le plan de l'armure. Dans le cas d'un tissage 2.5D, on parlera de « warp interlock » qui se présente sous la forme d'un tissu multicouche dont la liaison entre les couches superposées est assurée par les fils de chaîne. La technique de tissage utilisée est celle du tissage multi-chaîne sur un métier chaîne et trame au cours duquel l'ouverture de la foule est unidirectionnelle contrairement au tissage 3D.

Par « armure ou tissu multi-toile », on désigne ici un tissage 3D avec plusieurs couches de fils de trame dont l'armure de base de chaque couche est équivalente à une armure de type toile classique mais avec certains points de l'armure qui lient les couches de fils de trame entre elles.

Par « armure ou tissu multi-satin », on désigne ici un tissage 3D avec plusieurs couches de fils de trame dont l'armure de base de chaque couche est équivalente à une armure de type satin classique mais avec certains points de l'armure qui lient les couches de fils de trame entre elles.

Par « armure ou tissu multi-sergé », on désigne ici un tissage 3D avec plusieurs couches de fils de trame dont l'armure de base de chaque couche est équivalente à une armure de type sergé classique mais avec certains points de l'armure qui lient les couches de fils de trame entre elles.

Le procédé d'injection de l'invention s'applique particulièrement, mais non exclusivement, à la réalisation de pièces en matériau composite Oxyde/Oxyde ou matériau composite à matrice céramique (CMC), c'est-à-dire comportant un renfort fibreux formé à partir de fibres en matériau céramique réfractaire densifié par une matrice également en matériau céramique réfractaire.

Les fils utilisés pour tisser la texture fibreuse destinée à former le renfort fibreux de la pièce en matériau composite peuvent être notamment formés de fibres constituées d'un des matériaux suivants: l'alumine, la mullite, la silice, un aluminosilicate, un borosilicate, du carbure de silicium, du carbone ou d'un mélange de plusieurs de ces matériaux. Les particules solides présentes dans la suspension à injecter dans la texture fibreuse peuvent notamment être constituées d'un matériau choisi parmi : l'alumine, la mullite, la silice, les aluminosilicates, les aluminophosphates, les carbures, les borures, les nitrures et des mélanges de tels matériaux.

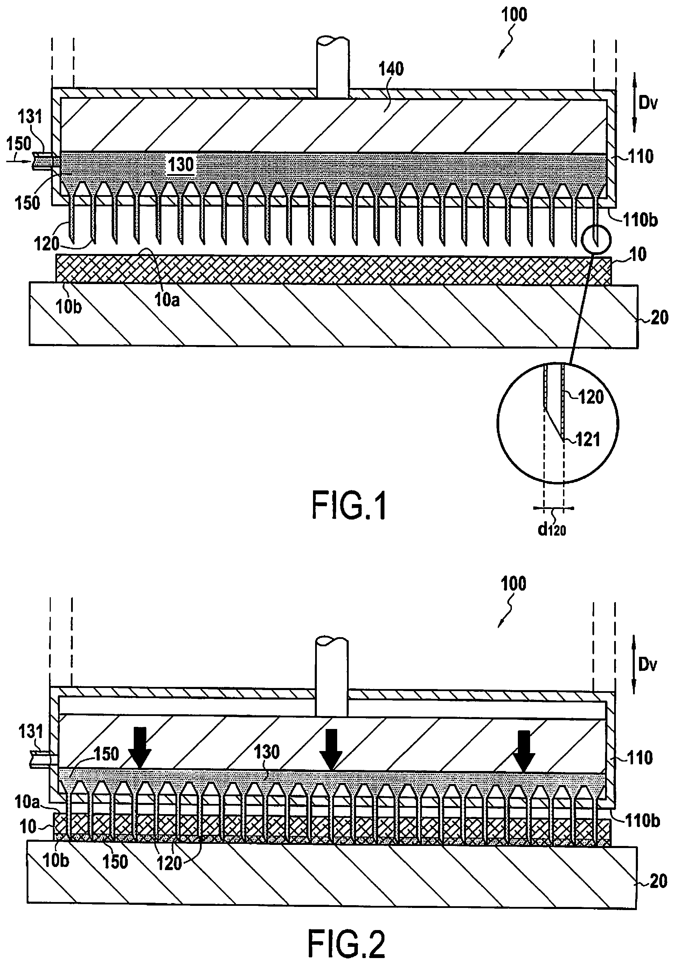

La figure 1 illustre le début d'un procédé d'injection d'une suspension chargée conformément à un mode de réalisation de l'invention. Une texture fibreuse 10 obtenue par tissage 3D ou 2.5D est posée sur un plateau support 20 de manière à présenter une face exposée 10a en vis-à-vis d'un outillage d'injection 100. L'outillage d'injection 100 comprend un boîtier 110 apte à se déplacer suivant une double direction Dv comme indiquée sur la figure 1. Le bord inférieur 110b du boîtier 110 comporte une pluralité d'aiguilles creuses 120 en communication avec une chambre d'injection 130 délimitée à l'intérieur du boîtier 110 par un piston 140 et le bord inférieur 110b du boîtier. Une suspension chargée 150 est introduite dans la chambre d'injection 130 par un port 131. Chaque aiguille creuse 120 comporte de préférence une extrémité 121 qui est biseauté et présente un diamètre d₁₂₀ compris en 0,4 mm et 0,8 mm. Dans l'exemple décrit ici, la position des aiguilles creuses 120 et, plus précisément, la position des extrémités 121 de celles-ci dans la texture fibreuse, sont contrôlées par le déplacement du boîtier 110 suivant double direction Dv.

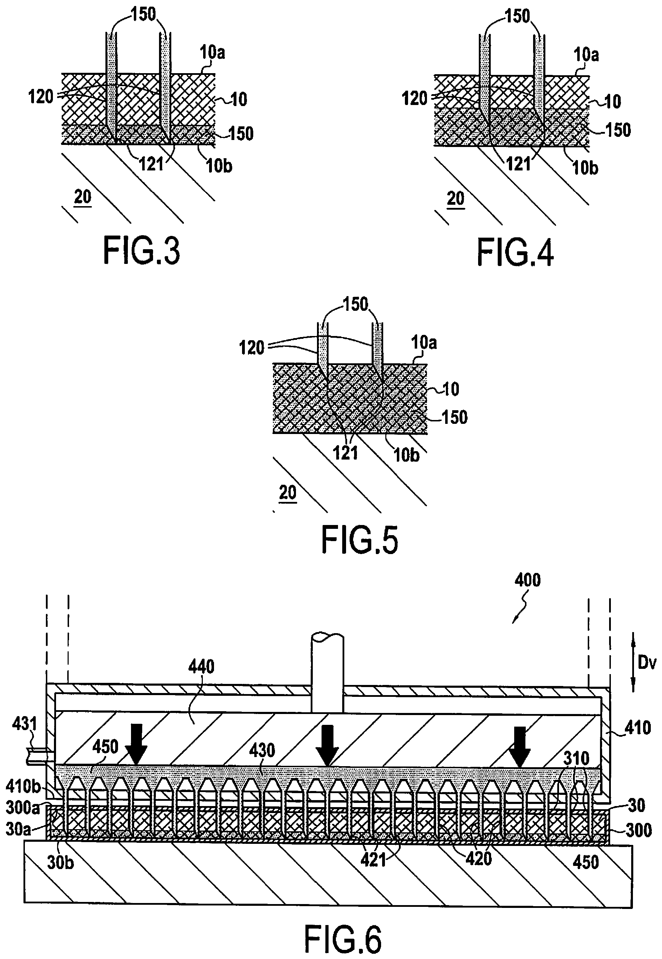

Comme illustrée sur la figure 2, l'injection débute par le placement des extrémités 121 des aiguilles creuses 120 au plus près de la face inférieure 10b de la texture fibreuse 10 en contact avec le plateau support 20, la suspension étant alors injectée dans la texture 10 par mise en mouvement du piston 140 permettant d'injecter une première quantité de suspension chargée 150 sur une épaisseur déterminée dans la texture fibreuse 10. L'injection de la suspension chargée 150 dans la texture fibreuse 10 se poursuit comme illustrée sur les figures 3 à 5 en déplaçant les extrémités 121 des aiguilles creuses 120 depuis la face inférieure 10b de la texture jusqu'au voisinage de la face supérieure 10a de la texture fibreuse 10 de manière à remplir la texture fibreuse dans toute son épaisseur avec la suspension chargée 150.

L'injection de la suspension chargée 150 dans la texture fibreuse 10 peut être réalisée de deux manières. La suspension chargée 150 peut être injectée en continu tandis que les aiguilles sont progressivement déplacées entre les deux faces opposées 10b et 10a de la texture fibreuse 10, c'est-à-dire de la position illustrée en figure 2 à la position illustrée à la figure 5. La suspension chargée 150 peut être également injectée de manière séquentielle. Dans ce cas, la ou les aiguilles sont déplacées séquentiellement les deux faces opposées 10b et 10a de la texture fibreuse 10, la ou les aiguilles étant stoppées à des positions intermédiaires entre ces deux faces, correspondant ici aux positions illustrées sur les figures 2 à 5, une dose déterminée de suspension chargée étant injectée dans la texture à chaque position intermédiaire.

La suspension chargée peut être injectée dans la texture fibreuse avant son compactage, celui-ci étant réalisé ultérieurement pour atteindre notamment un taux de fibres visé. La suspension chargée peut également être injectée dans la texture fibreuse alors que celle-ci est déjà compactée comme illustré sur la figure 6. Sur la figure 6, une texture fibreuse 30 tissée 3D ou 2.5D est maintenue dans un outillage de compactage 300 apte à appliquer sur celle-ci dans un taux de compaction déterminé. L'outillage 300 comporte sur sa face 300a en regard d'un outillage d'injection 400 une pluralité de perforations 310 destinées à permettre le passage d'aiguilles 420 de l'outillage d'injection. L'outillage d'injection 400 est similaire à l'outillage d'injection 100 décrit précédemment, à savoir qu'il comprend un boîtier 410 apte à se déplacer suivant une double direction Dv comme indiquée sur la figure 6. Le bord inférieur 410b du boîtier 410 comporte une pluralité d'aiguilles creuses 420 en communication avec une chambre d'injection 430 délimitée à l'intérieur du boîtier 410 par un piston 440 et le bord inférieur 410b du boîtier. Une suspension chargée 450 est introduite dans la chambre d'injection 430 par un port 431. Chaque aiguille creuse 420 comporte de préférence une extrémité 421 qui est biseauté et qui présente un diamètre compris en 0,4 mm et 0,8 mm.

L'injection de la suspension chargée 450 dans la texture fibreuse 30 est réalisée comme déjà décrit ci-avant en relation avec les figures 2 à 5, c'est-à-dire en déplaçant les extrémités 421 des aiguilles creuses 420 depuis la face inférieure 30b de la texture jusqu'au voisinage de la face supérieure 30a de la texture fibreuse 30 de manière à remplir la texture fibreuse dans toute son épaisseur avec la suspension chargée 450. L'injection de la suspension chargée 450 dans la texture fibreuse 30 peut être réalisée de manière continue ou séquentielle.

Dans les exemples décrits ci-avant, l'injection de la suspension chargée est réalisée au moyen d'une pluralité d'aiguilles creuses s'étendant suivant une même rangée alignée sur une des dimensions de la texture, par exemple sa largeur. Dans ce cas, après chaque injection dans toute l'épaisseur de la texture fibreuse, les aiguilles sont déplacées dans le sens de la longueur de la texture suivant un pas déterminé afin de couvrir l'ensemble de la texture avec l'injection locale de suspension chargé. Selon une variante de réalisation, l'outillage d'injection peut comporter une matrice d'aiguilles creuse s'étendant à la fois dans le sens de la largeur et de la longueur de la texture fibreuse, la matrice d'aiguilles étant éventuellement déplacée dans la direction de la largeur et/ou de la longueur de la texture lorsque que la matrice ne couvre pas entièrement la surface exposée de la texture fibreuse.

Selon une autre variante de réalisation, le procédé d'injection est mis en œuvre avec une seule aiguille qui est déplacée dans différentes directions par rapport à la texture fibreuse afin d'injecter la suspension chargée dans tout le volume de la texture fibreuse.

Une fois la texture fibreuse injectée avec la suspension chargée, celle-ci est mise en forme en étant éventuellement compactée suivant un taux de compactage permettant d'obtenir un taux de fibres déterminé.

Lorsque la phase liquide de la suspension ne correspond pas à un précurseur de matrice comme c'est le cas notamment d'une solution aqueuse, il n'est pas nécessaire de l'éliminer de la préforme à la différence des procédés de l'art antérieur. En effet, grâce à l'injection de la suspension chargée au moyen d'une ou plusieurs aiguilles creuses à cœur de la texture, il est possible d'utiliser des suspensions présentant une forte viscosité, c'est-à-dire des suspensions comprenant une faible proportion de phase liquide en comparaison avec la proportion de charges solides. Grâce à la présente invention, il est possible de mettre en œuvre des suspensions chargées dont la viscosité peut atteindre 10000 mPa.s, contre seulement 400 mPa.s au grand maximum pour des procédés d'injection de l'art intérieur tels que les procédés de type moulage par injection (RTM) ou aspiration de poudre submicronique (APS). Dans la pratique, cela signifie qu'il est possible de mettre en œuvre des suspensions contenant une fraction massique de charge pouvant aller jusqu'à 85% massique. La capacité du procédé de l'invention à mettre en œuvre des suspensions aussi concentrées réduit très significativement la durée de l'opération d'injection des suspensions. Dans ce cas, la faible quantité de phase liquide est éliminée naturellement lors du traitement thermique de transformation des charges solides en matrice. Toutefois, si cela s'avérait nécessaire, la préforme peut être séchée avant la transformation des charges solides.

La préforme est ensuite soumise à un traitement thermique afin de transformer le ou les précurseurs de matrice présents dans la suspension chargée injectée.

Dans le cas de la réalisation d'une pièce en matériau composite Oxyde/Oxyde ou CMC, le traitement thermique consiste à fritter les particules solides afin de former la matrice dans la préforme.

L'invention n'est pas limitée à la réalisation de pièce en matériau composite Oxyde/Oxyde ou CMC. L'invention peut également s'appliquer à la fabrication de pièce en matériau composite à matrice organique, la matrice étant dans ce cas chargée de particules solides. A titre d'exemple, la structure fibreuse peut être réalisée par tissage 3D ou 2.5D entre des fils de carbone et injectée conformément au procédé de l'invention avec une suspension chargée comprenant une résine de type epoxy et des charges solides constituées de noir de carbone, de carbures, ou d'oxydes. Dans ce cas, le traitement thermique de transformation du précurseur de matrice consiste à polymériser la résine.

Un essai de mise en œuvre d'un procédé conforme à l'invention a été réalisé. Celui-ci a consisté à injecter une texture fibreuse obtenue par tissage interlock avec des fils d'alumine Nextel 610^{™} avec une contexture de 8 fils/cm. Les dimensions de la texture injectée sont 120 mm de longueur, 100 mm de largeur et 5 mm d'épaisseur avec une suspension chargée comprenant 60% en masse d'une poudre d'alumine alpha commercialisée par la société Baikowski sous la dénomination SM8 (D50 = 0,3 µm environ) et 40% en masse d'une solution aqueuse à 50% de phosphate monoaluminique Al(H₂PO₄)₃.

La suspension chargée a été injectée avec une aiguille creuse unique d'un diamètre de 0,8 mm et présentant une extrémité biseauté, l'aiguille étant reliée à une seringue d'injection. A chaque position d'injection, l'aiguille est déplacée progressivement dans l'épaisseur de la texture fibreuse (retrait progressif de l'aiguille entre deux faces opposées de la texture) à une vitesse de 6 cm/min avec injection continu de suspension. L'ensemble de la texture est injectée en multipliant les points d'injection avec l'aiguille, celle-ci étant déplacée d'un pas de 1 cm entre chaque position d'injection dans les deux dimensions de la texture (largeur et longueur). L'injection de la texture dans tout son volume dans les conditions décrites ci-avant a été réalisée en 10 minutes. A titre de comparaison, une même injection de cette texture avec des procédés d'injection de l'art intérieur tels que les procédés de type moulage par injection (RTM) ou aspiration de poudre submicronique (APS) prend plusieurs heures.

Une fois l'injection terminée, un moulage de la texture est réalisé sous une pression de 5 bars et à une température de 350°C. Un traitement thermique de frittage des particules d'alumine est ensuite réalisé à 850°C sous atmosphère ambiante.

On obtient une pièce en matériau composite Oxyde/Oxyde qui présente un taux volumique de fibre de 45% et un taux de porosité de 24%.

## Revendications

1. Procédé d'injection d'une suspension chargée dans une texture fibreuse (10) présentant un tissage tridimensionnel ou multicouche comprenant l'injection d'une suspension (150) contenant une poudre de particules solides dans le volume de la texture fibreuse, **caractérisé en ce que** l'injection de la suspension chargée (150) est réalisée au moyen d'au moins une aiguille creuse (120) en communication avec un dispositif d'alimentation en suspension chargée (100), chaque aiguille étant configurée pour traverser la texture fibreuse et se déplacer dans au moins une direction (Dv) entre une première face (10b) et une deuxième face opposée (10a) de la texture fibreuse (10) de manière à injecter la suspension chargée à plusieurs profondeurs déterminées dans la texture fibreuse.

2. Procédé selon la revendication 1, dans lequel chaque aiguille creuse (120) présente un diamètre externe (d₁₂₀) compris entre 0,4 mm et 0,8 mm.

3. Procédé selon la revendication 1 ou 2, dans lequel chaque aiguille creuse (120) présente une extrémité biseautée (121).

4. selon l'une quelconque des revendications 1 à 3, dans lequel la ou les aiguilles (120) sont déplacées séquentiellement entre une première face (10b) et une deuxième face opposée (10a) de la texture fibreuse (10), la ou les aiguilles étant stoppées à des positions intermédiaires entre ces deux faces, une dose déterminée de suspension chargée (150) étant injectée dans la texture à chaque position intermédiaire.

5. selon l'une quelconque des revendications 1 à 3, dans lequel la ou les aiguilles (120) sont déplacées en continu entre une première face (10b) et une deuxième face opposée (10a) de la texture fibreuse (10), la suspension chargée (150) étant injectée en continu suivant un débit déterminé dans la texture fibreuse.

6. Procédé selon l'une quelconque des revendications 1 à 5, dans lequel, durant l'injection de la suspension chargée (450), la texture fibreuse (30) est placée dans un outillage de compactage (300) comprenant au moins sur une face (300a) un ou plusieurs orifices de passage (310) pour la ou les aiguilles (420).

7. Procédé de fabrication d'une pièce en matériau composite comprenant :
- formation d'une texture fibreuse (10) par tissage tridimensionnel ou multicouche entre une pluralité de fils,
- injection d'une suspension chargée (150) dans la texture fibreuse selon l'une quelconque des revendications 1 à 6, la suspension chargée comprenant au moins un précurseur liquide ou solide d'une matrice,
- compactage de la texture fibreuse injectée,
- transformation dudit au moins un précurseur en matrice.

8. Procédé selon la revendication 7, dans lequel les fils de la texture fibreuse (10) sont formés de fibres céramiques réfractaires, la suspension chargée (150) contenant des particules céramiques réfractaires en tant que précurseur solide d'une matrice céramique, le procédé comprenant le traitement thermique des particules céramiques réfractaires présentes dans la texture fibreuse afin de former une matrice céramique réfractaire dans ladite texture.

9. Procédé selon la revendication 7 ou 8, dans lequel les fils de la texture fibreuse (10) sont formés de fibres constituées d'un ou plusieurs des matériaux suivants : l'alumine, la mullite, la silice, un aluminosilicate, un borosilicate, du carbure de silicium et du carbone.

10. Procédé selon l'une quelconque des revendications 7 à 9, **caractérisé en ce que** les particules céramiques réfractaires sont en un matériau choisi parmi : l'alumine, la mullite, la silice, un aluminosilicate, un aluminophosphate, la zircone, un carbure, un borure et un nitrure.

## Patentansprüche

1. Verfahren zum Injizieren einer beladenen Suspension in eine Fasertextur (10), die eine dreidimensionale oder mehrlagige Webart aufweist, umfassend das Injizieren einer Suspension (150), die ein Pulver aus festen Partikeln enthält, in das Volumen der Fasertextur, **dadurch gekennzeichnet, dass** das Injizieren der beladenen Suspension (150) mittels mindestens einer Hohlnadel (120) erfolgt, die mit einer Vorrichtung zur Zufuhr der beladenen Suspension (100) in Verbindung steht, wobei jede Nadel so konfiguriert ist, dass sie die Fasertextur durchdringt und sich in mindestens einer Richtung (Dv) zwischen einer ersten Fläche (10b) und einer gegenüberliegenden zweiten Fläche (10a) der Fasertextur (10) bewegt, um die beladene Suspension in mehreren bestimmten Tiefen in die Fasertextur zu injizieren.

2. Verfahren nach Anspruch 1, wobei jede Hohlnadel (120) einen Außendurchmesser (d₁₂₀) zwischen 0,4 mm und 0,8 mm aufweist.

3. Verfahren nach Anspruch 1 oder 2, wobei jede Hohlnadel (120) ein abgeschrägtes Ende (121) aufweist.

4. Verfahren nach einem der Ansprüche 1 bis 3, wobei die Nadel(n) (120) sequentiell zwischen einer ersten Fläche (10b) und einer gegenüberliegenden zweiten Fläche (10a) der Fasertextur (10) bewegt werden, wobei die Nadel(n) an Zwischenpositionen zwischen diesen beiden Flächen gestoppt werden, wobei an jeder Zwischenposition eine bestimmte Dosis der beladenen Suspension (150) in die Textur injiziert wird.

5. Verfahren nach einem der Ansprüche 1 bis 3, wobei die Nadel(n) (120) kontinuierlich zwischen einer ersten Fläche (10b) und einer gegenüberliegenden zweiten Fläche (10a) der Fasertextur (10) bewegt werden, wobei die beladene Suspension (150) kontinuierlich mit einer bestimmten Durchflussrate in die Fasertextur injiziert wird.

6. Verfahren nach einem der Ansprüche 1 bis 5, wobei während des Injizierens der beladenen Suspension (450) die Fasertextur (30) in einem Verdichtungswerkzeug (300) angeordnet wird, das auf mindestens einer Fläche (300a) eine oder mehrere Durchgangsöffnungen (310) für die Nadel(n) (420) aufweist.

7. Verfahren zur Herstellung eines Bauteils aus Verbundmaterial, umfassend:
- Bilden einer Fasertextur (10) durch dreidimensionales oder mehrlagiges Weben zwischen einer Vielzahl von Fäden,
- Injizieren einer beladenen Suspension (150) in die Fasertextur nach einem der Ansprüche 1 bis 6, wobei die beladene Suspension mindestens einen flüssigen oder festen Vorläufer einer Matrix umfasst,
- Verdichten der injizierten Fasertextur,
- Umwandeln des mindestens einen Vorläufers in eine Matrix.

8. Verfahren nach Anspruch 7, wobei die Fäden der Fasertextur (10) aus feuerfesten keramischen Fasern gebildet sind, wobei die beladene Suspension (150) feuerfeste keramische Partikel als festen Vorläufer einer keramischen Matrix enthält, wobei das Verfahren die Wärmebehandlung der in der Fasertextur vorhandenen feuerfesten keramischen Partikel umfasst, um eine feuerfeste keramische Matrix in der Textur zu bilden.

9. Verfahren nach Anspruch 7 oder 8, wobei die Fäden der Fasertextur (10) aus Fasern gebildet sind, die aus einem oder mehreren der folgenden Materialien bestehen: Aluminiumoxid, Mullit, Siliziumdioxid, einem Aluminiumsilikat, einem Borosilikat, Siliciumcarbid und Kohlenstoff.

10. Verfahren nach einem der Ansprüche 7 bis 9, **dadurch gekennzeichnet, dass** die feuerfesten keramischen Partikel aus einem Material sind, das ausgewählt ist aus: Aluminiumoxid, Mullit, Siliziumdioxid, einem Aluminiumsilikat, einem Aluminiumphosphat, Zirkonoxid, einem Karbid, einem Borid und einem Nitrid.

## Claims

1. A method for injecting a loaded suspension into a fibrous texture (10) having a three-dimensional or multilayer weaving comprising the injection of a suspension (150) containing a powder of solid particles into the volume of the fibrous texture, **characterized in that** the injection of the loaded suspension (150) is carried out by means of at least one hollow needle (120) in communication with a loaded suspension supply device (100), each needle being configured to pass through the fibrous texture and being movable in at least one direction (Dᵥ) extending between a first face (10b) and a second opposite face (10a) of the fibrous texture (10) so as to inject the loaded suspension at one or more determined depths in the fibrous texture.

2. The method according to claim 1, wherein each hollow needle (120) has an external diameter (d₁₂₀) of between 0.4 mm and 0.8 mm.

3. The method according to claim 1 or 2, wherein each hollow needle (120) has a beveled end (121).

4. The method according to any one of claims 1 to 3, wherein the needle(s) (120) is/are moved sequentially between a first face (10b) and a second opposite face (10a) of the fibrous texture (10), the needle(s) being stopped at intermediate positions between these two faces, a determined dose of loaded suspension (150) being injected into the texture at each intermediate position.

5. The method according to any one of claims 1 to 3, wherein the needle(s) (120) is/are moved continuously between a first face (10b) and a second opposite face (10a) of the fibrous texture (10), the loaded suspension (150) being injected continuously at a determined flow rate into the fibrous texture.

6. The method according to any one of claims 1 to 5, wherein, during the injection of the loaded suspension (450), the fibrous texture (30) is placed in a compaction tooling (300) comprising at least on one face (300a) one or more through holes (310) for the needle(s) (420).

7. A method for manufacturing a part made of composite material comprising:
- the formation of a fibrous texture (10) by three-dimensional or multilayer weaving between a plurality of yarns,
- the injection of a loaded suspension (150) into the fibrous texture according to any one of claims 1 to 6, the loaded suspension comprising at least one liquid or solid precursor of a matrix,
- the compaction of the injected fibrous texture,
- the transformation of said at least one precursor into a matrix.

8. The method according to claim 7, wherein the yarns of the fibrous texture (10) are formed of refractory ceramic fibers, the loaded suspension (150) containing refractory ceramic particles as a solid precursor of a ceramic matrix, the method comprising the heat treatment of the refractory ceramic particles present in the fibrous texture in order to form a refractory ceramic matrix in said texture.

9. The method according to claim 7 or 8, wherein the yarns of the fibrous texture (10) are formed of fibers consisting of one or more of the following materials: the alumina, the mullite, the silica, an aluminosilicate, a borosilicate, silicon carbide and carbon.

10. The method according to any one of claims 7 to 9, **characterized in that** the refractory ceramic particles are made of a material chosen from: the alumina, the mullite, the silica, an aluminosilicate, an aluminophosphate, the zirconia, a carbide, a boride and a nitride.
